# EUROPÄISCHE PATENTANMELDUNG

(11) **EP 1 702 524 A1**
(43) Veröffentlichungstag der Anmeldung: **20.09.2006**
(21) Anmeldenummer: 06002527.7
(22) Anmeldetag: 08.02.2006
(51) Int. Cl.: A24D 3/02, A24C 5/34, G01N 21/88

(54) **Erkennung von Inhomogenitäten in einem Filterstrang**

(30) Priorität: 17.03.2005 DE 102005012811
(71) Anmelder: Hauni Maschinenbau AG, 21033 Hamburg (DE)
(72) Erfinder: Hapke, Siegfried, 21502 Geesthacht (DE); Meins, Karsten, 21481 Lauenburg (DE)
(74) Vertreter: Grebner, Christian Georg Rudolf

(57) **Zusammenfassung**

Die Erfindung betrifft eine Einrichtung (100) zum Erkennen von vereinzelten Einschlüssen (130) in einem kontinuierlich geförderten Strang der Tabak verarbeitenden Industrie, insbesondere Filterstrang (24), umfassend eine Lichtquelle (122) zur Durchleuchtung des Strangs (24) im Durchlichtverfahren und einen Sensor (114) zur wenigstens teilweisen Erfassung der im Strang (24) durch die Lichtquelle (122) hervorgerufenen Helligkeit. Die Einrichtung (100) wird dadurch weitergebildet, dass eine Auswerteeinrichtung zur Erkennung der Anwesenheit von vereinzelten Einschlüssen (130) im Strang (24) mittels der erfassten Helligkeit vorgesehen ist.

Ferner betrifft die Erfindung eine Strangmaschine der Tabak verarbeitenden Industrie, insbesondere Filterherstellungsmaschine, sowie ein Verfahren zum Erkennen von vereinzelten Einschlüssen in einem kontinuierlich geförderten Strang der Tabak verarbeitenden Industrie, insbesondere Filterstrang (24), wobei der Strang (24) im Durchlichtverfahren mittels einer Lichtquelle (122) durchleuchtet wird und die durch die Lichtquelle (122) hervorgerufene Helligkeit im durchleuchteten Strang (24) mittels eines Sensors (114) wenigstens teilweise erfasst wird.

## Beschreibung

Die Erfindung betrifft eine Einrichtung zum Erkennen von vereinzelten Einschlüssen in einem kontinuierlich geförderten Strang der Tabak verarbeitenden Industrie, insbesondere Filterstrang, umfassend eine Lichtquelle zur Durchleuchtung des Strangs im Durchlichtverfahren und einen Sensor zur wenigstens teilweisen Erfassung der im Strang durch die Lichtquelle hervorgerufenen Helligkeit.

Ferner betrifft die Erfindung ein Verfahren zum Erkennen von vereinzelten Einschlüssen in einem kontinuierlich geförderten Strang der Tabak verarbeitenden Industrie, insbesondere Filterstrang, wobei der Strang im Durchlichtverfahren mittels einer Lichtquelle durchleuchtet wird und die durch die Lichtquelle hervorgerufene Helligkeit im durchleuchteten Strang mittels eines Sensors wenigstens teilweise erfasst wird.

Des Weiteren betrifft die Erfindung eine Strangmaschine der Tabak verarbeitenden Industrie, insbesondere Filterherstellungsmaschine.

Aus der Offenlegungsschrift DE-A-27 32 520 ist ein Verfahren zur Überprüfung eines kontinuierlich vorwärts bewegten Stranges, insbesondere Zigarettenfilterstranges, in welchem Abschnitte unterschiedlicher Materialbeschaffenheit und/oder Ausbildung kontinuierlich aufeinander folgen, beschrieben. Hierbei wird mindestens ein sich in einer mindestens annähernd senkrecht zur Filterstranglängsachse erstreckenden Ebene verlaufender Lichtstrahl in den Filterstrang eingeleitet und der Helligkeitswert an einer mindestens annähernd in der gleichen, den Lichtstrahl enthaltenden Ebene sich befindenden, von der Lichteinleitstelle entfernten Stelle der Filterstrangaußenseite mittels eines fotoelektronischen Bauelements gemessen, wobei das Messergebnis in einer mit dem fotoelektronischen Bauelement elektrisch verbundenen Auswertschaltung ausgewertet wird.

Darüber hinaus ist in der Patentschrift US-4,001,579, die der Patentschrift DE-C-25 10 502 entspricht, eine Vorrichtung zur Kontrolle zusammengesetzter Zigarettenfilter während der Fabrikation nach fortlaufenden Ansätzen der Filterelemente in eine rohrförmige Hülle offenbart.

Ausgehend von diesem Stand der Technik ist es Aufgabe der vorliegenden Erfindung, in einem kontinuierlich längsaxial geförderten Filterstrang eingebaute Kapseln oder dergleichen zu lokalisieren.

Die Aufgabe wird bei einer Einrichtung zum Erkennen von vereinzelten Einschlüssen in einem kontinuierlich geförderten Strang der Tabak verarbeitenden Industrie, insbesondere Filterstrang, umfassend eine Lichtquelle zur Durchleuchtung des Strangs im Durchlichtverfahren und einen Sensor zur wenigstens teilweisen Erfassung der im Strang durch die Lichtquelle hervorgerufenen Helligkeit dadurch gelöst, dass eine Auswerteeinrichtung zur Erkennung der Anwesenheit von vereinzelten Einschlüssen im Strang mittels der erfassten Helligkeit vorgesehen ist.

Bei der Herstellung von Filtersträngen werden Inhomogenitäten oder Einschlüsse in Gestalt von Additivkörpern, wie z.B. Flocken oder Kapseln, oder auch von Löchern gezielt und vereinzelt in die ansonsten homogen ausgebildeten Filterstränge eingebracht bzw. darin erzeugt, so dass mittels der erfindungsgemäßen Einrichtung das Vorhandensein der Inhomogenitäten oder Einschlüsse sowie die richtige Lage in einem Filterstrang bzw. in einem Einzelfilter ermittelt und ausgewertet wird. Daneben kann gleichfalls der Abstand zwischen den Einschlüssen in Bezug auf die längsaxiale Richtung bzw. die Förderrichtung des Strangs erfasst werden. Hierzu wird der geförderte Filterstrang durchstrahlt, so dass von einer Fotodiode das durch den Filterstrang hindurchtretende Licht bzw. das entsprechende Helligkeitsprofil empfangen wird. Anschließend wird anhand des Helligkeitsprofiles ermittelt, ob eine Inhomogenität im geförderten Filterstrang vorhanden ist.

Mittels der Fördergeschwindigkeit des Filterstrangs kann zusätzlich festgestellt werden, in welchen Abständen in längsaxialer Richtung die Inhomogenitäten vorhanden sind. Als weiteres Ergebnis der Erkennung ist es möglich, anhand der fortlaufenden erfassten Helligkeitsprofile und der Fördergeschwindigkeit des Strangs die Abmessungen des Einschlusses bzw. der Inhomogenität zu bestimmen. Dies erfolgt in der Auswerteeinrichtung, an die die Signale bzw. die erfassten Helligkeitsprofile des Sensors übermittelt werden.

Ferner ist es günstig, wenn eine Abbildungseinrichtung zur Abbildung der Helligkeit des Strangs auf dem Sensor vorgesehen ist. Durch diese Maßnahme wird der Öffnungswinkel der Empfangsoptik minimiert, so dass auf der Empfängerseite mit einer abbildenden Optik bzw. Einrichtung gearbeitet wird. Somit wird beispielsweise auf einer fotoempfindlichen Schicht eines Fotosensors ein kleinerer Bereich eines durch die Lichtquelle erzeugten Helligkeitsbereichs des Strangs bzw. des Helligkeitprofils erfasst.

Vorteilhafterweise weist die Abbildungseinrichtung wenigstens eine Linse auf, so dass eine optische Einrichtung ausgebildet wird.

Darüber hinaus ist es vorteilhaft, wenn eine Messeinrichtung eine Lichtquelle, eine Abbildungseinrichtung und einen Sensor umfasst.

In einer bevorzugten Weiterbildung sind wenigstens zwei Messeinrichtungen für den Strang vorgesehen.

Insbesondere sind mehrere Messeinrichtungen quer zur Längsachse des Strangs, vorzugsweise in einer Ebene, angeordnet.

Außerdem wird ein durch die Lichtquelle hervorgerufener Ausbreitungskegel im Filterstrang minimiert, wenn die Lichtquelle als Laserlichtquelle ausgebildet ist, so dass der zu untersuchende Filterstrang bzw. der längsaxial geförderte stabförmige Artikel fächerartig oder punktförmig mit Licht beaufschlagt wird, wodurch die Qualität der Erkennung durch einen reduzierten Ausbreitungskegel des Lichtes im Strang verbessert wird. Vorzugsweise wird der Filterstrang mittels eines Lasers durchstrahlt, der Licht im roten sichtbaren Bereich aussendet. Typischerweise hat derartiges Laserlicht eine Wellenlänge im Bereich von 655 nm.

Ferner ist insbesondere im Strahlengang zwischen der Abbildungseinrichtung und dem Sensor wenigstens eine Blende vorgesehen.

Eine weitere Lösung der Aufgabe erfolgt durch eine Strangmaschine der Tabak verarbeitenden Industrie, insbesondere Filterherstellungsmaschine bzw. Filterstrangmaschine, die mit einer erfindungsgemäßen Einrichtung zum Erkennen von vereinzelten Einschlüssen in einem kontinuierlich geförderten Strang der verarbeitenden Industrie ausgestattet ist. Zur Vermeidung von Wiederholungen wird auf die voranstehenden Ausführungen zur Einrichtung ausdrücklich verwiesen.

Ferner wird die Aufgabe durch ein Verfahren zum Erkennen von vereinzelten Einschlüssen in einem kontinuierlich geförderten Strang der Tabak verarbeitenden Industrie, insbesondere Filterstrang, wobei der Strang im Durchlichtverfahren mittels einer Lichtquelle durchleuchtet wird und die durch die Lichtquelle hervorgerufene Helligkeit im durchleuchteten Strang mittels eines Sensors wenigstens teilweise erfasst wird, gelöst, das dadurch weitergebildet wird, dass anhand der erfassten Helligkeit die Anwesenheit von vereinzelten Einschlüssen im Strang erkannt wird.

Das Prinzip des erfindungsgemäßen Verfahrens beruht darauf, dass an einer Filterproduktionseinrichtung bzw. -anlage die Anzahl und/oder die Lage von eingebrachten Inhomogenitäten und gegebenenfalls auch der längsaxiale Abstand der Einschlüsse zueinander im Filterstrang durch Verwendung von Licht, insbesondere Laserlicht, erkannt sowie ermittelt wird. Die Inhomogenitäten im Filterstrang führen zu einer verschlechterten Lichtleitfähigkeit und somit zu einem anderen Helligkeitsprofil als das Profil im Filterstrangabschnitt ohne Inhomogenität. Das durch den Einschluss veränderte Helligkeitsprofil ist derart signifikant, so dass das Vorhandensein einer Inhomogenität im Filterstrang erkannt wird. Der Unterschied in der Lichtleitfähigkeit zwischen dem Filterstrangmaterial und der eingebrachten Inhomogenität führt zu einem auswertbaren Signal.

Hierzu wird vorteilhafterweise vorgeschlagen, dass die Helligkeit mittels einer Abbildungseinrichtung auf dem Sensor wenigstens teilweise abgebildet wird.

Ferner wird vorteilhafterweise der Strang mittels einer Laserlichtquelle durchleuchtet, die vorzugsweise Licht im roten sichtbaren Bereich aussendet.

Gemäß einer bevorzugten Ausführungsform ist es günstig, wenn der Strang mittels wenigstens zweier Lichtquellen durchleuchtet wird.

Das Verfahren wird gemäß einer bevorzugten Weiterbildung dadurch weitergebildet, dass anhand der erfassten Helligkeiten die Lage und/oder die Anzahl der Einschlüsse erkannt werden.

Weiterhin ist es von Vorteil, wenn bei Abweichungen der erfassten Helligkeiten von vorbestimmten Sollwerten Strang bzw. der Filterstrang oder ein Abschnitt des Strangs bzw. Filterstrangs entfernt wird.

Vorzugsweise wird mittels einer Auswerteeinrichtung die Anwesenheit von Einschlüssen im Strang bzw. Filterstrang erkannt.

Im Folgenden wird die Erfindung anhand der in den Zeichnungen dargestellten Ausführungsbeispiele ohne Beschränkung des allgemeinen Erfindungsgedankens erläutert, auf die im Übrigen bezüglich aller im Text nicht näher beschriebenen, erfindungsgemäßen Einzelheiten ausdrücklich verwiesen wird. Es zeigen:
- Fig. 1: eine Ansicht einer Filterherstellungsmaschine mit einer Vorrichtung in einer schematischen Darstellung,
- Fig. 2: einen Längsschnitt durch eine Ausführungsform einer erfindungsgemäßen Einrichtung und
- Fig. 3: einen Querschnitt durch eine zweite Ausführungsform einer erfindungsgemäßen Erkennungseinrichtung.

In den folgenden Zeichnungen sind gleiche bzw. gleichartige Elemente oder Teile mit denselben Bezugsziffern versehen, so dass von einer erneuten Vorstellung jeweils abgesehen wird.

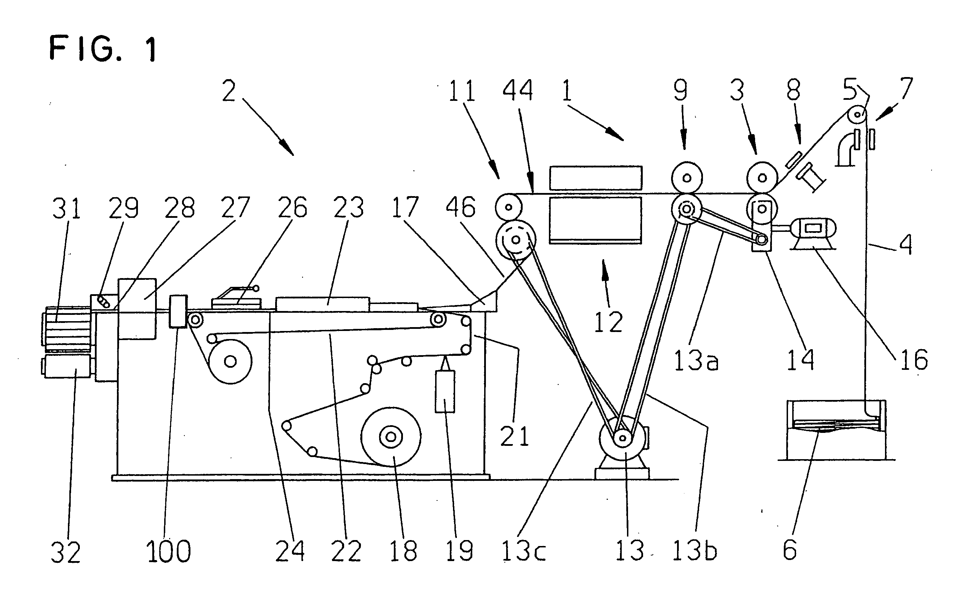

In Fig. 1 ist eine Vorrichtung zum Herstellen eines Filterstrangs, insbesondere für die Herstellung von Filtern für Zigaretten und dergleichen rauchbaren Artikeln in einer schematischen Seitenansicht dargestellt. Diese Vorrichtung besteht aus zwei Hauptbaugruppen, einem Filtertowaufbereitungsgerät 1 für einen endlosen Filtermaterial- bzw. Filtertowstreifen und einem Bearbeitungsgerät 2 zur Herstellung von umhüllten Filterstäben.

Das Aufbereitungsgerät 1, z.B. vom in der Tabak verarbeitenden Industrie bekannten Typ AF 2, AF 3 oder AF 4 der Patentanmelderin, weist ein Walzenpaar 3 zum fortlaufenden Abziehen eines endlosen Filtermaterialstreifens 4 von einem Ballen 6 auf. Nach der Entnahme vom Ballen 6 passiert der Filtertowstreifen 4 auf seinem Weg zum Walzenpaar 3, auf dem er über eine Umlenkrolle 5 geführt ist, zwei Luftdüsen 7 und 8, die zur Ausbreitung und Auflockerung des Gewebes des Filtertowstreifens 4 dienen. Dem Walzenpaar 3 folgen zwei weitere Walzenpaare 9 und 11, zwischen denen sich eine Auftragseinrichtung 12 zum Aufbringen von Weichmacher auf den zwischen den Walzenpaaren 9 und 11 ausgebreitet geführten Filtertowstreifen 4 befindet.

Die Walzenpaare 3 und 9 bilden eine Reckeinrichtung. Die Drehzahl des Walzenpaares 3 ist kleiner als die des Walzenpaares 9 und über ein Getriebe 14 veränderbar, dessen Übersetzung durch einen Verstellmotor 16 geändert werden kann. Das Geschwindigkeitsverhältnis zwischen den Walzenpaaren 3 und 9 gibt den Grad der Reckung des Filtermaterialstreifens 4 vor. Im gezeigten Ausführungsbeispiel sind die als Bremswalzen wirkenden Walzen des Walzenpaares 3 angetrieben. Sie können auch als Schleppwalzen ausgebildet sein, die aufgrund von Reibungsverhältnissen als Bremswalzen wirken.

Alle Walzenpaare 3, 9 und 11 sind von einem Hauptantriebsmotor 13 über Riementriebe 13 a bis 13 c antreibbar. Anstelle eines Hauptantriebsmotors 13 können auch einer oder mehrere separate Antriebe für die Walzenpaare vorgesehen sein, die getrennt steuerbar sind.

Der aufbereitete, mit Weichmacher besprühte Filtermaterialstreifen 4 bildet einen Füllmaterialstrang 44, der über das Walzenpaar 11 von dem Aufbereitungsgerät 1 in einen Einlauftrichter 17 des Bearbeitungsgerätes 2 gelangt, z.B. vom in der Tabak verarbeitenden Industrie bekannten Typ KDF 2, KDF 3 oder KDF 4 der Patentanmelderin.

Im Bearbeitungsgerät 2 wird der Füllmaterialstrang 44 zusammengefasst und auf einen von einer Bobine 18 abgezogenen und mittels eines Applikationsmittels in Gestalt einer Beleimvorrichtung 19 mit Leim versehenen Hüllmaterialstreifen 21 aufgelegt. Der Hüllmaterialstreifen 21 und der zusammengefasste Füllmaterialstrang 44 gelangen auf ein Formatband 22, das beide Komponenten durch ein Format 23 führt, das den Hüllmaterialstreifen 21 um den Füllmaterialstrang 44 aus Filtermaterial herumlegt und dabei einen endlosen Filterstrang 24 bildet. Dieser durchläuft eine Nahtplätte bzw. eine Kühlstrecke 26, in welcher der Leim in der Überlappungsnaht abbindet.

Eine Nahtplätte ist an dieser Stelle vorgesehen, wenn es sich bei dem auf den Hüllmaterialstreifen aufgebrachten Leim um einen Nassleim handelt. In der Nahtplätte wird dann die Klebnaht abgetrocknet. Eine Kühlstrecke ist vorzusehen, wenn auf den Hüllmaterialstreifen 21 ein Heißschmelzkleber (hot melt) aufgetragen wird. Dieser wird zum Abbinden in der Kühlstrecke 26 gekühlt. Nachfolgend wird der Filterstrang 24 durch eine erfindungsgemäße Erkennungseinrichtung 100 transportiert, um gezielt in den Filterstrang 24 eingebrachte Inhomogenitäten hinsichtlich ihrer Lage und ihres Abstandes im Filterstrang 24 zu lokalisieren.

Anschließend werden von dem Filterstrang 24 mittels eines Messerapparates 27 fortlaufend Filterstäbe 28 abgeschnitten, die von einem Beschleuniger 29 in eine Ablegertrommel 31 überführt werden, in der sie in queraxialer Förderrichtung gefördert werden. Von der Ablegertrommel 31 gelangen die Filterstäbe zu einem Ablegerband 32, von dem aus sie einer Weiterverarbeitung oder einer Zwischenlagerung zugeführt werden.

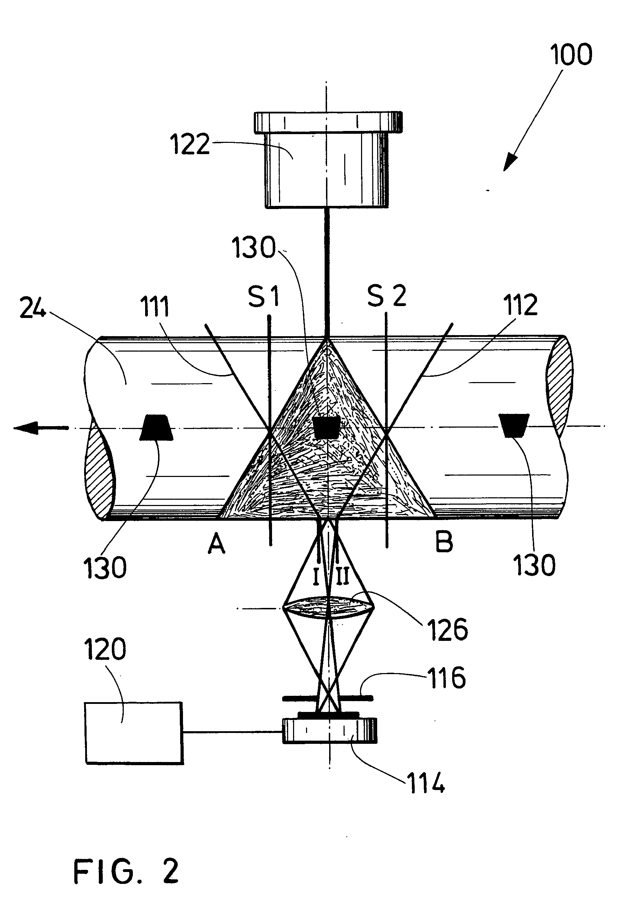

Fig. 2 zeigt einen Längsschnitt durch eine Ausführungsform einer erfindungsgemäßen Erkennungseinrichtung 100, die eine Laserlichtquelle 122 und einen der Laserlichtquelle 122 gegenüber angeordneten Sensor 114 aufweist. Zwischen der Laserlichtquelle 122 und dem Sensor 114 wird ein mit Einschlüssen oder Inhomogenitäten hergestellter Filterstrang 24 hindurchgefördert.

Der aus Zelluloseacetat bestehende Filterstrang 24 weist im Innern, vorzugsweise im Bereich seiner Mittelachse, in regelmäßigen Abständen Einschlüsse oder Inhomogenitäten auf, die gezielt in den Filterstrang 24, z.B. mit einer Einrichtung gemäß EP-A-1 012 961, eingebracht wurden. Die Einschlüsse oder Inhomogenitäten werden beispielsweise durch kleine Kapseln, Flocken, Körner oder Additivkörner oder planmäßig vorbestimmte vorgesehene Löcher gebildet, die insbesondere in äquidistanten Abständen eingebaut sind oder werden. Die absichtlich vereinzelten, eingebrachten Inhomogenitäten im Filterstrang 24 sind mit den Bezugszeichen 130 bezeichnet.

Der Filterstrang 24 wird im Durchlichtverfahren auf der Sendeseite von der Laserlichtquelle 122 beleuchtet. Mittels der Laserlichtquelle 122 wird ein strichförmiger Strahl punktförmig oder fächerartig auf den Filterstrang 24 gerichtet, so dass auf der Eintrittsseite des Lichtstrahls Licht punktförmig und senkrecht in den Filterstrang 24 eingeleitet wird. Von diesem Eintrittspunkt breitet sich das Licht im Filterstrang 24 durch Streuung kegelförmig aus, so dass das Licht auf der Austrittsseite des Filterstrangs 24 im Bereich des Austrittspunkts A - B infolge der Streuung verteilt ist.

Bei der in Fig. 2 dargestellten Erkennungseinrichtung 100 wird die Ausdehnung bzw. der Abstand der Ebenen S1, S2 durch den Ausbreitungskegel des eingespeisten Lichtstrahls in den Filterstrang 24 bzw. das Material, den Ausbreitungskegel der Lichtquelle 122 sowie den Öffnungswinkel der Empfangsoptik bestimmt. Der Ausbreitungskegel des Lichts im Filterstrang 24 bzw. dem Material ist bedingt durch die Eigenschaften des Materials und kann daher von außen nicht beeinflusst werden.

Auf der Empfängerseite ist vor dem Sensor 114, z.B. einer Fotodiode, eine Blende 116 vorgesehen. Aufgrund der geometrischen Verhältnisse ergibt sich, dass in einem bestimmten Winkel Licht von der austretenden Seite des Filterstrangs 24 durch die Blende 16 auf eine fotoempfindliche Schicht des Sensors 114 gelangt. Übertragen auf die Oberfläche des Filterstrangs 24 bedeutet dies, dass Licht aus der schraffierten Zone I-II auf die fotoempfindliche Schicht des Sensors 114 gelangt.

Außerdem wird auf der Austrittsseite der Einfluss des Öffnungswinkels der Empfangsoptik dadurch minimiert, dass mittels einer Linse 126 eine Abbildungseinrichtung vorhanden ist, die die Blende 116 enthält, so dass nur eine kurze Strecke I-II der Oberfläche des Filterstrangs 24 auf die fotoempfindliche Schicht des Sensors 114 durchgelassen wird. Dadurch wird auch der Abstand der beiden Ebenen S1, S2 deutlich reduziert.

Wird in den Strahlengang des Lichtkegels der Lichtquelle 122 ein Filterstrang 24 mit wenigstens einer Inhomogenität 130 in die Messzone eingebracht, wirkt sich dieser Hell-Dunkel-Übergang durch die Inhomogenität intensitätsmäßig aus, wenn er die Ebene S1 erreicht. Der Intensitätsübergang ist spätestens abgeschlossen, wenn er die parallele Ebene S2 durchläuft.

Das mittels der Laserlichtquellen ausgesendete Licht, beispielsweise im roten sichtbaren Bereich (Wellenlänge ca. 655 nm), durchdringt den Filterstrang 24 und trifft auf den Sensor 114, dessen elektrisches Signal einer Auswerteeinheit 120 zugeführt wird. Mittels der Auswerteeinheit 120 werden die Veränderungen im Helligkeitsprofil bzw. auszuwertenden Signal erfasst, so dass anhand der Auswerteeinheit 120 festgestellt wird, ob eine Inhomogenität 130 im Strahlengang vorhanden ist. Das Helligkeitsprofil hängt von der unterschiedlichen Lichtleitfähigkeit des Materials im Filterstrang 24 bzw. der Inhomogenitäten 130 ab.

Die Inhomogenitäten 130 führen zu einer verschlechterten Lichtleitfähigkeit, so dass anhand des veränderten Helligkeitsprofils die Inhomogenität 130 lokalisiert bzw. detektiert wird. Anhand der Transportgeschwindigkeit des Filterstrangs 24 sowie der gemessenen Helligkeitsprofile kann auch der Abstand zwischen den vereinzelten Inhomogenitäten und gegebenenfalls auch die Abmessungen der Inhomogenitäten 130 festgestellt werden.

Um die Inhomogenitäten 130 bzw. Kapseln sicher erkennen zu können, werden die Helligkeitsprofile mittels eines vorgegebenen Sollwertes oder mittels eines vorbestimmten Soll-Helligkeitsprofils verglichen, wobei bei Abweichungen von diesen Sollwerten die Abwesenheit oder das Vorhandensein einer Inhomogenität 130 im Filterstrang 24 festgestellt wird.

Wird ferner beispielsweise ermittelt, dass nach Erkennen einer Inhomogenität 130 an einer Stelle in einem vorbestimmten Abstand zu dieser vorauseilenden Inhomogenität 130 keine Inhomogenität im Filterstrang 24 vorliegt, wird in einem nach folgendem Schritt der entsprechende Abschnitt des Filterstrangs 24 aus dem weiteren Produktionsprozess entfernt.

Der Ausbreitungskegel der Laserlichtquelle 122, der auf der Oberfläche des Filterstrangs 24 zur Beleuchtung der Strecke A-B führt, ist abhängig von der Größe des Kegelwinkels. Der Öffnungswinkel der Empfangselektronik ist festgelegt durch die Dimension der Blende 116 und die Größe der fotoempfindlichen Schicht des Sensors 114.

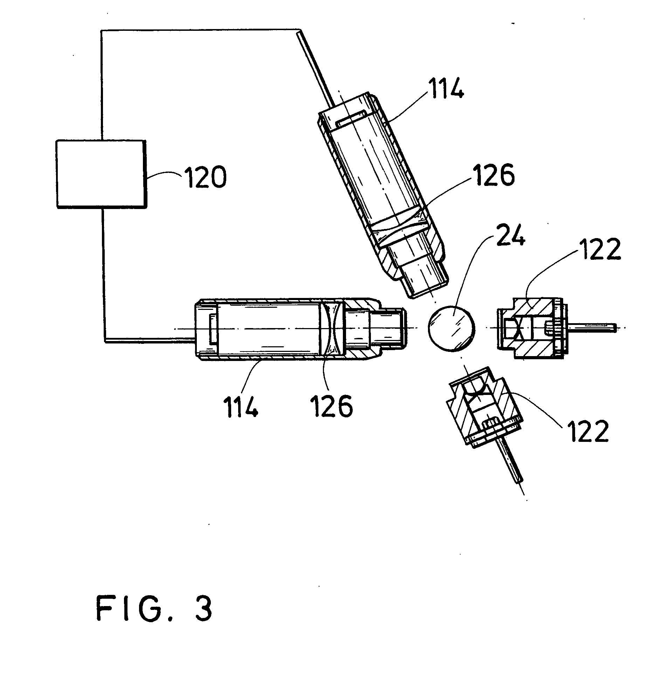

In Fig. 3 ist ein weiteres Ausführungsbeispiel einer Anordnung zur Erkennung bzw. Lokalisation von Inhomogenitäten in einem Filterstrang 24 gezeigt. Hierbei sind zwei Erkennungseinrichtungen 100 quer zur Förderrichtung des Filterstrangs 24 angeordnet, so dass in einer Ebene der Filterstrang 24 von zwei Laserlichtquellen 122 mit Licht beaufschlagt wird.

Durch die zweiachsige Messung bzw. Erkennung ist eine Unabhängigkeit von der axialen Lage der Inhomogenitäten 130 im Filterstrang 24 möglich. Hierbei werden die von den Sensoren 114 erfassten Helligkeitsprofile an die gemeinsame Auswerteeinheit 120 weitergeführt. Da die Laserlichtquellen 122 und Sensoren 114 in einer senkrechten Ebene zur Förderrichtung des Filterstrangs angeordnet sind, ist es aufgrund der zweiachsigen Durchleuchtung des Filterstrangs 24 möglich, die genaue Lage der Inhomogenitäten im Filterstrang 24 festzustellen.

### Bezugszeichenliste

- 1: Filtertowaufbereitungsgerät
- 2: Bearbeitungsgerät
- 3: Walzenpaar
- 4: Filtermaterialstreifen
- 5: Umlenkrolle
- 6: Ballen
- 7: Luftdüse
- 8: Luftdüse
- 9: Walzenpaar
- 11: Walzenpaar
- 12: Auftragseinrichtung
- 13: Hauptantriebsmotor
- 13 a, 13 b, 13 c: Riementrieb
- 14: Getriebe
- 16: Verstellmotor
- 17: Einlauftrichter
- 18: Bobine
- 19: Beleimvorrichtung
- 21: Hüllmaterialstreifen
- 22: Formatband
- 23: Format
- 24: Filterstrang
- 26: Kühlstrecke
- 27: Messerapparat
- 28: Filterstäbe
- 29: Beschleuniger
- 31: Ablegertrommel
- 32: Ablegerband
- 44: Füllmaterialstrang

- 100: Erkennungseinrichtung
- 111: Linie
- 112: Linie
- 114: Sensor
- 116: Blende
- 120: Auswerteeinheit
- 122: Lichtquelle
- 122: Laserlichtquelle
- 126: Linse
- 130: Inhomogenität

- I - II: Zone
- A: Punkt
- B: Punkt
- S1: Ebene
- S2: Ebene

## Patentansprüche

1. Einrichtung (100) zum Erkennen von vereinzelten Einschlüssen (130) in einem kontinuierlich geförderten Strang (24) der Tabak verarbeitenden Industrie, insbesondere Filterstrang (24), umfassend eine Lichtquelle (122) zur Durchleuchtung des Strangs (24) im Durchlichtverfahren und einen Sensor (114) zur wenigstens teilweisen Erfassung der im Strang (24) durch die Lichtquelle (122) hervorgerufenen Helligkeit, **dadurch gekennzeichnet, dass** eine Auswerteeinrichtung (120) zur Erkennung der Anwesenheit von vereinzelten Einschlüssen (130) im Strang (24) mittels der erfassten Helligkeit vorgesehen ist.

2. Einrichtung nach Anspruch 1, **dadurch gekennzeichnet, dass** eine Abbildungseinrichtung (126) zur Abbildung der Helligkeit des Strangs (24) auf dem Sensor (114) vorgesehen ist.

3. Einrichtung (100) nach Anspruch 2, **dadurch gekennzeichnet, dass** die Abbildungseinrichtung (126) wenigstens eine optische Linse (126) aufweist.

4. Einrichtung (100) nach einem der Ansprüche 1 bis 3, **dadurch gekennzeichnet, dass** eine Messeinrichtung eine Lichtquelle (122), eine Abbildungseinrichtung (126) und einen Sensor (114) umfasst.

5. Einrichtung (100) nach Anspruch 4, **dadurch gekennzeichnet, dass** wenigstens zwei Messeinrichtungen für den Strang (24) vorgesehen sind.

6. Einrichtung (100) nach Anspruch 4 oder 5, **dadurch gekennzeichnet, dass** mehrere Messeinrichtungen quer zur Längsachse des Strangs (24), vorzugsweise in einer Ebene, angeordnet sind.

7. Einrichtung (100) nach einem oder mehreren der Ansprüche 1 bis 6, **dadurch gekennzeichnet, dass** die Lichtquelle (122) als Laserlichtquelle (12) ausgebildet ist.

8. Einrichtung (100) nach einem oder mehreren der Ansprüche 1 bis 7, **dadurch gekennzeichnet, dass** im Strahlengang zwischen der Abbildungseinrichtung (126) und dem Sensor (114) wenigstens eine Blende (116) vorgesehen ist.

9. Strangmaschine der Tabak verarbeitenden Industrie, insbesondere Filterherstellungsmaschine, mit einer Einrichtung (100) nach einem oder mehreren der Ansprüche 1 bis 8.

10. Verfahren zum Erkennen von vereinzelten Einschlüssen (130) in einem kontinuierlich geförderten Strang (24) der Tabak verarbeitenden Industrie, insbesondere Filterstrang (24), wobei der Strang (24) im Durchlichtverfahren mittels einer Lichtquelle (122) durchleuchtet wird und die durch die Lichtquelle (122) hervorgerufene Helligkeit im durchleuchteten Strang (24) mittels eines Sensors (114) wenigstens teilweise erfasst wird, **dadurch gekennzeichnet, dass** anhand der erfassten Helligkeit die Anwesenheit von vereinzelten Einschlüssen (130) im Strang (24) erkannt wird.

11. Verfahren nach Anspruch 10, **dadurch gekennzeichnet, dass** die Helligkeit mittels einer Abbildungseinrichtung (126) auf dem Sensor (114) wenigstens teilweise abgebildet wird.

12. Verfahren nach Anspruch 10 oder 11, **dadurch gekennzeichnet, dass** der Strang (24) mittels einer Laserlichtquelle (22) durchleuchtet wird.

13. Verfahren nach einem der Ansprüche 10 bis 12, **dadurch gekennzeichnet, dass** der Strang (24) mittels wenigstens zweier Lichtquellen (122) durchleuchtet wird.

14. Verfahren nach einem oder mehreren der Ansprüche 10 bis 13, **dadurch gekennzeichnet, dass** anhand der erfassten Helligkeiten die Lage und/oder die Anzahl der Einschlüsse erkannt werden.

15. Verfahren nach einem oder mehreren der Ansprüche 10 bis 14, **dadurch gekennzeichnet, dass** bei Abweichungen der erfassten Helligkeiten von vorbestimmten Sollwerten der Strang (24) oder ein Abschnitt des Strangs (24) entfernt wird.

16. Verfahren nach einem oder mehreren der Ansprüche 10 bis 15, **dadurch gekennzeichnet, dass** mittels einer Auswerteeinrichtung (120) die Anwesenheit von Einschlüssen (130) im Strang (24) erkannt wird.
